# EUROPEAN PATENT APPLICATION

(11) **EP 4 404 219 A1**
(43) Date of publication of application: **24.07.2024**
(21) Application number: 23834582.1
(22) Date of filing: 07.06.2023
(51) Int. Cl.: H01F 1/057, H01F 1/08, H01F 41/02, H01F 7/02

(54) **HIGH-COERCIVITY ND-FE-B SERIES SINTERED MAGNET AND PREPARATION METHOD AND APPLICATION THEREOF**

(30) Priority: 06.07.2022 CN 202210800345
(71) Applicant: Yantai Zhenghai Magnetic Material Co., Ltd., Yantai Shandong 264006 (CN)
(72) Inventor: YU, Yongjiang, Yantai, Shandong 264006 (CN); GU, Xiaoqian, Yantai, Shandong 264006 (CN); WANG, Cong, Yantai, Shandong 264006 (CN); ZHANG, Yumeng, Yantai, Shandong 264006 (CN); MA, Dan, Yantai, Shandong 264006 (CN)
(74) Representative: Gille Hrabal Partnerschaftsgesellschaft mbB Patentanwälte
(86) International application number: PCT/CN2023/098983
(87) International publication number: WO 2024/007808

(57) **Abstract**

Disclosed in the present invention are a high-coercivity Nd-Fe-B sintered magnet and a preparation method and use thereof. The sintered magnet comprises the following components in percentage by a mass: 100%: 26-37 wt% of R, R being at least one rare earth element including Nd; 0.07-0.23 wt% of Mn; 0.8-1 wt% of B; 0.5-4 wt% of M, M comprising Cu and/or Al, and further comprising at least one selected from Co, Ti, Ni, Zr and Ga; and the remaining being Fe. In the present invention, a Mn-containing auxiliary alloy powder is mixed with a Mn-free neodymium-iron-boron main alloy powder to prepare the Nd-Fe-B sintered magnet. In the Mn-containing auxiliary alloy powder, other than the Mn elements in the scope of the invention, it is also necessary to contain at least one of metals Cu and Al. Mn can replace a part of Fe in the main phase, so that the amount of solid solution of beneficial elements in grain boundaries in the main phase is reduced, and the coercivity is improved.

## Description

The present application claims priority to the prior application with the patent application No. 202210800345X and entitled "HIGH-COERCIVITY SINTERED ND-FE-B BASED MAGNET, PREPARATION METHOD THEREFOR AND USE THEREOF", filed with the China National Intellectual Property Administration on July 06, 2022, which is incorporated herein by reference in its entirety.

### TECHNICAL FIELD

The present disclosure relates to the field of rare earth permanent magnets, and particularly, to a high-coercivity sintered Nd-Fe-B based magnet, a preparation method therefor and use thereof.

### BACKGROUND

The permanent magnet material is widely applied to the fields of clean energy such as new energy automobile industry, wind power generation, and the like, so the fields of clean energy are undoubtedly an important development direction in the future. The rapid development in the fields of clean energy puts higher requirements on the magnetic property of the sintered magnet, and the increasingly harsh working environment requires the sintered magnet to have higher coercivity.

The coercivity optimization of the permanent magnet material is a technical difficulty to be broken through all the time. The particle size of the powder can be reduced through process means, such that the particle size is refined, thereby improving the coercivity. However, the surface energy of the powder is increased due to the refined particle size, such that the abnormal growth of sintered crystal grains is easily caused. With the continuous progress of the neodymium-iron-boron process, the performance breakthrough brought by the process means is weaker and weaker, and thus other technologies should be actively adopted.

In addition to the process means, the grain boundary structure can be adjusted to increase the coercivity, and metals represented by Al and Cu have been proved to be effective in improving the wettability of the main phase and the grain boundary phases to increase the coercivity. Taking Al as an example, the solid solution of Al into the main phase causes a decrease in the Curie temperature and a decrease in the remanence. Taking Cu as an example, the coercivity can be effectively improved when Cu is distributed at the interface of the main phase and the grain boundary phases, but the magnetic property is reduced when it enters the main phase. The method for improving the coercivity by adjusting the grain boundary structure by adding a metal is limited by the amount of the metal added, and when the amount of the metal added is lower than a certain limit, the magnetic property is improved slightly; when the amount of the metal added is higher than a certain limit, the magnetic property is rather reduced. Therefore, a new technology is needed to adjust the grain boundary structure based on the prior art to achieve a higher coercivity index.

In order to solve the problems described above, document CN101657863B discloses that, in a sintered rare earth-iron-boron based magnet, the coercivity is improved by adding Al, and meanwhile, the decrease in magnetic property is inhibited to a minimum by replacing the iron component with Mn. Document CN102067249B discloses that, in a sintered rare earth-transition metal-boron based magnet, the amount of Cu added can be increased and the coercivity can be improved by adding a predetermined amount of Mn. Both of the documents described above suggest that Mn is added to a sintered rare earth-iron-boron based magnet to improve the coercivity, and confirm that the addition of Mn can improve the coercivity of the sintered magnet, but the ranges of Mn contents are different in the two documents. In Table 4 of the example of document CN101657863B, the highest value of coercivity occurs when the amount of Mn atom is 0.05%, and when the amount of Mn atom added exceeds 0.05%, the coercivity improvement effect is not significant; when the amount of Mn atom is 0.4%, the coercivity level is even lower than that when the amount of Mn atom added is 0.01%. It can be seen that the Mn content is far from "Mn: not less than 0.02 atomic% and not more than 0.5 atomic%" mentioned in the document.

Document CN101689416B discloses that the room-temperature coercivity can be improved by adding a predetermined amount of Pr and Mn to a sintered magnet, and suggests that a technical effect cannot be obtained when the amount of Pr added is lower than a predetermined amount, but a specific principle thereof is not detailed.

### SUMMARY

In order to solve the technical problems described above, the technical solutions of the present disclosure are as follows.

Provided is a high-coercivity sintered Nd-Fe-B based magnet, which comprises the following components by a mass ratio of 100%:
26-37 wt% of R, wherein the R is at least one rare earth element comprising Nd;
0.07-0.23 wt% of Mn;
0.8-1 wt% of the B;
0.5-4 wt% of M, wherein the M comprises Cu and/or Al, and further comprises at least one of Co, Ti, Ni, Zr, and Ga; and
the balance of Fe.

According to an embodiment of the present disclosure, the R accounts for 28-36 wt%, wherein the R comprises Nd, and further comprises at least one of Pr, Dy, Ho, and Tb.

According to an embodiment of the present disclosure, the Mn accounts for 0.07 wt%, 0.08 wt%, 0.1 wt%, 0.12 wt%, 0.14 wt%, 0.15 wt%, 0.16 wt%, 0.17 wt%, 0.18 wt%, 0.19 wt%, 0.2 wt%, 0.21 wt%, 0.22 wt%, or 0.23 wt%.

According to an embodiment of the present disclosure, the B accounts for 0.8 wt%, 0.82 wt%, 0.84 wt%, 0.86 wt%, 0.88 wt%, 0.9 wt%, 0.92 wt%, 0.94 wt%, 0.95 wt%, 0.98 wt%, or 1 wt%.

According to an embodiment of the present disclosure, the M preferably accounts for 0.8-3 wt%, wherein M comprises Cu and/or Al, and further comprises at least one of Co, Ti, Zr, and Ga.

According to an embodiment of the present disclosure, the grain size of the high-coercivity sintered Nd-Fe-B based magnet is 3-6 µm, preferably 3.9-4.8 µm.

The present disclosure further provides a method for preparing the high-coercivity sintered Nd-Fe-B based magnet described above, which comprises the following steps:
(S1) preparing an Mn-free neodymium-iron-boron main alloy scale and an Mn-containing auxiliary alloy scale respectively;
   wherein the Mn-free neodymium-iron-boron main alloy scale comprises: 29-36 wt% of the R; 0.9-1 wt% of B; 0.1-3.5 wt% of the M; and the balance of Fe;
   the Mn-containing auxiliary alloy scale comprises: 12-37 wt% of the R, 1-10 wt% of Mn; 0-1 wt% of B; 0.5-30 wt% of the M; and the balance of Fe;
   preferably, in the step (S1), the M in the main alloy scale does not comprise Cu and/or Al, and the M in the auxiliary alloy scale mandatorily comprise Cu and/or Al, wherein the content of Cu in the auxiliary alloy scale is 0-9 wt%, the content of Al in the auxiliary alloy scale is 0-8 wt%, and the contents of Cu and Al are not simultaneously 0; and
(S2) performing hydrogen decrepitation and jet milling on the Mn-free neodymium-iron-boron main alloy scale and the Mn-containing auxiliary alloy scale in the step (S1) to obtain a mixed alloy powder, and performing pressing, sintering, and tempering treatments on the mixed alloy powder to prepare the high-coercivity sintered Nd-Fe-B based magnet.

According to an embodiment of the present disclosure, in the step (S1), the R in the Mn-containing auxiliary alloy scale comprises at least 12-30 wt% of Nd.

According to an embodiment of the present disclosure, in the step (S2), the Mn-free neodymium-iron-boron main alloy scale accounts for 87-98 wt% of the total amount of the Mn-free neodymium-iron-boron main alloy scale and the Mn-containing auxiliary alloy scale, and may be, for example, 87 wt%, 87.6 wt%, 89 wt%, 91 wt%, 92 wt%, 93 wt%, 95 wt%, 96.3 wt%, 97 wt%, 97.6 wt%, 97.8 wt%, or 98 wt%.

According to an embodiment of the present disclosure, in the step (S2), the mixed alloy powder comprises an Mn-free neodymium-iron-boron main alloy powder and an Mn-containing auxiliary alloy powder.

According to an embodiment of the present disclosure, in the step (S2), the mixed alloy powder may be oriented and shaped in a magnetizing field, and then subjected to a cold isostatic pressing to form a pressed compact.

According to an embodiment of the present disclosure, in the step (S2), the sintering temperature is 800-1200 °C, and the holding time is 3-20 hours. Preferably, two-stage sintering is adopted; the primary sintering temperature is 900-1200 °C, preferably 900-1080 °C, and the holding time is 3-8 hours, preferably 6-8 hours; the secondary sintering temperature is 800-1100 °C, and the holding time is 3-7 hours.

Preferably, when the content of Mn in the sintered magnet is 0.15-0.23 wt% and the particle size of the alloy powder is 3.0-3.8 µm, the primary sintering temperature is 900-1050 °C, and the holding time is 6-8 hours.

According to an embodiment of the present disclosure, in the step (S2), the tempering treatment is two-stage tempering. For example, a two-stage tempering treatment is performed in a vacuum tempering furnace. The primary tempering temperature is 700-950 °C, and the holding time is 4-8 hours; and the secondary tempering temperature is 450-600 °C, and the holding time is 4-8 hours.

According to an embodiment of the present disclosure, the step (S2) may be a step (S2a) of performing hydrogen decrepitation and jet milling on the Mn-free neodymium-iron-boron main alloy scale and the Mn-containing auxiliary alloy scale in the step (S1) respectively to obtain an Mn-free neodymium-iron-boron main alloy powder and an Mn-containing auxiliary alloy powder respectively, uniformly mixing the Mn-free neodymium-iron-boron main alloy powder and the Mn-containing auxiliary alloy powder to obtain a mixed alloy powder, and performing pressing, sintering, and tempering treatments on the mixed alloy powder to prepare the high-coercivity Nd-Fe-B based sintered magnet.

According to the present disclosure, in the step (S2a), the average particle size of the Mn-free neodymium-iron-boron main alloy powder is 3.0-3.8 µm, for example, 3 µm, 3.1 µm, 3.2 µm, 3.3 µm, 3.4 µm, 3.5 µm, 3.6 µm, 3.7 µm, or 3.8 µm.

Preferably, the average particle size of the Mn-containing auxiliary alloy powder is 3-4 µm, for example, 3 µm, 3.1 µm, 3.2 µm, 3.3 µm, 3.4 µm, 3.5 µm, 3.6 µm, 3.7 µm, 3.8 µm, 3.9 µm, or 4 µm.

According to an embodiment of the present disclosure, the step (S2) may be further a step (S2b) of mixing the Mn-free neodymium-iron-boron main alloy scale and the Mn-containing auxiliary alloy scale in the step (S1), performing hydrogen decrepitation and jet milling to obtain a mixed alloy powder, and performing pressing, sintering, and tempering treatments on the mixed alloy powder to prepare the high-coercivity sintered Nd-Fe-B based magnet.

According to the present disclosure, in the step (S2b), the average particle size of the mixed alloy powder is 3.0-3.8 µm, for example, 3.0 µm, 3.1 µm, 3.2 µm, 3.3 µm, 3.4 µm, 3.5 µm, 3.6 µm, 3.7 µm, or 3.8 µm.

As an exemplary embodiment of the present disclosure, the method for preparing the high-coercivity sintered Nd-Fe-B based magnet specifically comprises the following steps:
(1) preparing an Mn-free neodymium-iron-boron main alloy scale and an Mn-containing auxiliary alloy scale respectively;
(2) mixing the Mn-free neodymium-iron-boron main alloy scale and the Mn-containing auxiliary alloy scale according to a ratio, and then performing hydrogen decrepitation-jet milling to obtain a mixed alloy powder, wherein the mixed alloy powder comprises an Mn-free neodymium-iron-boron main alloy powder and an Mn-containing auxiliary alloy powder;
   or, performing hydrogen decrepitation-jet milling on the Mn-free neodymium-iron-boron main alloy scale and the Mn-containing auxiliary alloy scale respectively to obtain an Mn-free neodymium-iron-boron main alloy powder and an Mn-containing auxiliary alloy powder respectively, and mixing the main alloy powder and the auxiliary alloy powder, wherein the particle size of the Mn-free neodymium-iron-boron main alloy powder is 3.0-3.8 µm, and the particle size of the Mn-containing auxiliary alloy powder is 3.0-4.0 µm;
   wherein the Mn-free neodymium-iron-boron main alloy scale accounts for 87-98 wt% of the total amount of the Mn-free neodymium-iron-boron main alloy scale and the Mn-containing auxiliary alloy scale;
(3) orienting and shaping the mixed alloy powder uniformly mixed in the step (2) in a magnetizing field, then subjected to cold isostatic pressing to form a pressed compact, and performing a primary sintering on the pressed compact in a vacuum sintering furnace, wherein the primary sintering temperature is 900-1200 °C, and the holding time is 3-8 hours; and then performing a secondary sintering, wherein the secondary sintering temperature is 800-1100 °C, and the holding time is 3-7 hours, to prepare a blank; wherein
   when the content of Mn in the sintered magnet is 0.15-0.23 wt% and the particle size of the alloy powder is 3.0-3.8 µm, the primary sintering temperature is 900-1050 °C, and the holding time is 6-8 hours; and
(4) performing a two-stage tempering on the blank in the step (3) in a vacuum tempering furnace, wherein the primary tempering temperature is 700-950 °C, and the holding time is 4-8 hours; the secondary tempering temperature is 450-600 °C, and the holding time is 4-8 hours, to prepare the high-coercivity sintered Nd-Fe-B based magnet.

The present disclosure further provides use of the high-coercivity sintered Nd-Fe-B based magnet described above in the fields of new energy automobile industry, wind power generation, and the like.

The beneficial effects of the present disclosure are as follows:
According to the present disclosure, the sintered Nd-Fe-B magnet is prepared by mixing the Mn-containing auxiliary alloy powder with the Mn-free neodymium-iron-boron main alloy powder, wherein the Mn-containing auxiliary alloy powder mandatorily comprises at least one of metals Cu and Al besides the Mn element within the scope of the present disclosure, and Mn can replace a part of Fe in the main phase, such that the amount of beneficial elements solid-dissolved in the main phase at grain boundaries is reduced, thereby improving the coercivity. According to the present disclosure, a part of Nd is replaced with Pr. In case that it is ensured that Nd is the main element in the main phase, the amount of Pr added is not related to the amount of Mn added, which may be that no reaction is occurred after Pr is added to the main phase.

In the prior art, low-melting-point metals Cu and Al are generally used for improving the grain boundary structure to increase the coercivity. As Al has high solubility in the main phase, the magnetic property will be damaged when Al enters the main phase. Cu can improve the wettability of a grain boundary phase in a grain boundary and promote the generation of a thin-layer grain boundary phase. Therefore, the amounts of Al and Cu added should be controlled within a proper range. According to the present disclosure, Mn is added in the form of an auxiliary alloy powder. When the Fe element is replaced with the Mn element, a wrapping layer of Mn is formed, such that less Cu and less Al enter the main phase, and thus the grain boundary structure is improved. Therefore, compared with the alloy smelting method in the prior art, the dual alloy method of the present disclosure can improve the coercivity of the sintered magnet, and meanwhile solve the problem that the remanence is greatly reduced in the prior art.

According to the present disclosure, the main alloy scale and the auxiliary alloy scale are crushed by jet milling to the range of 3.0-3.8 µm and 3-4 µm respectively, or the main alloy scale and the auxiliary alloy scale are mixed and crushed to the range of 3.0-3.8 µm, so as to obtain fine crystal grains. Meanwhile, the Mn, Cu, Al, and other grain boundary elements added into the auxiliary alloy can more fully and uniformly wrap the main phase grains to strengthen the grain boundaries. Further, when the particle size of the mixed alloy powder is reduced, the surface energy is sharply increased, and a sintered magnet with higher coercivity can be prepared by controlling the sintering temperature and the sintering time on the premise of ensuring sufficient density of the sintered body. According to the present disclosure, it is further found that when the content of Mn in the sintered magnet is 0.15-0.23 wt% and the particle size of the alloy powder is 3.0-3.8 µm, if the sintering time is appropriately prolonged at the sintering temperature of 900-1050 °C, the higher coercivity can be obtained in the same tempering process.

The present disclosure provides a method for preparing a high-coercivity sintered Nd-Fe-B based magnet by using a dual alloy method, which comprises: mixing a main alloy powder and an auxiliary alloy powder comprising Mn, and Cu and/or Al, and adjusting the sintering temperature, to obtain uniform and continuous grain boundary phases, thereby improving the coercivity. A sintered magnet with higher coercivity can be obtained when the grain size is fine.

### BRIEF DESCRIPTION OF THE DRAWINGS

FIG. 1 is a graph showing Hcj of the sintered magnets in Examples 3 and 8-16 and Comparative Examples 9-13 as a function of the amount of Mn added.
FIG. 2 is a graph showing the grain size and the coercivity of the sintered magnets in Examples 17-21 and Comparative Examples 14-18 as a function of the average particle size of the mixed alloy powder.

### DETAILED DESCRIPTION

The device of the present disclosure will be illustrated in further detail with reference to specific examples. It should be understood that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the starting materials used in the following examples are all commercially available products or can be prepared by known methods.

### Examples 1-6 and Comparative Examples 1-6

The sintered magnets were prepared according to the following steps.
(1) Starting materials were weighed according to the proportion of each main alloy scale in Table 1 (the unit was wt%), blended, smelted under an argon atmosphere and then casted onto a quenching roller to prepare Mn-free neodymium-iron-boron main alloy scales (namely the main alloys in Table 1). Similarly, the starting materials of the auxiliary alloy were melted and casted under an argon atmosphere to prepare Mn-containing auxiliary alloy scales (namely the auxiliary alloys in Table 1). The main alloy scales and the auxiliary alloy scales were mixed according to a proportion, and then subjected to hydrogen decrepitation and jet milling to give mixed alloy powders having uniform particle sizes shown in Table 2.
(2) The mixed alloy powders in the step (1) were oriented and shaped in a magnetizing field, and then subjected to a cold isostatic pressing to form pressed compacts. The pressed compacts were subjected to two-stage sintering according to the sintering temperatures and the sintering times shown in Table 2.
(3) The blanks described above were subjected to two-stage tempering in a vacuum tempering furnace, wherein the primary tempering temperature was 800 °C, and the holding time was 5 hours; the secondary tempering temperature was 500 °C, and the holding time was 5 hours, so as to prepare the sintered magnets.

### Example 7

Example 7 differed from Examples 1-6 as follows.
(1) The element proportions in Example 7 are shown in Table 1. The starting materials were weighed according to the proportion of each main alloy scale in Table 1 (the unit was wt%), blended, smelted under an argon atmosphere and then casted onto a quenching roller to prepare Mn-free neodymium-iron-boron main alloy scales (namely the main alloys in Table 1). Similarly, the starting materials of the auxiliary alloy were melted and casted under an argon atmosphere to prepare Mn-containing auxiliary alloy scales (namely, the auxiliary alloys in Table 1). The prepared main alloy scales and auxiliary alloy scales were respectively subjected to hydrogen decrepitation and jet milling to give main alloy powders and auxiliary alloy powders having uniform particle sizes respectively, wherein the average particle size of the main alloy powders was 3.4 µm, and the average particle size of the auxiliary alloy powders was 3.4 µm. The main alloy powders and the auxiliary alloy powders were uniformly mixed to give mixed alloy powders.
(2) The mixed alloy powders in the step (1) were oriented and shaped in a magnetizing field, and then subjected to cold isostatic pressing to form pressed compacts. The pressed compacts were subjected to two-stage sintering according to the sintering temperatures and the sintering times shown in Table 2.
(3) The blanks described above were subjected to two-stage tempering in a vacuum tempering furnace, wherein the primary tempering temperature was 800 °C, and the holding time was 5 hours; the secondary tempering temperature was 500 °C, and the holding time was 5 hours, so as to prepare the sintered magnet.

### Comparative Examples 7-8

(1) Starting materials were weighed according to the proportion of each alloy component in Table 1 (the unit was wt%), blended, smelted under an argon atmosphere and then casted onto a quenching roller to prepare scales. The scales were subjected to hydrogen decrepitation and jet milling to give neodymium-iron-boron alloy powders having uniform particle sizes.
(2) The neodymium-iron-boron alloy powders in the step (1) were oriented and shaped in a magnetizing field, and then subjected to cold isostatic pressing to form pressed compacts. The pressed compacts were subjected to two-stage sintering according to the sintering temperatures and the sintering times shown in Table 2.
(3) The blanks described above were subjected to two-stage tempering in a vacuum tempering furnace, wherein the primary tempering temperature was 800 °C, and the holding time was 5 hours; the secondary tempering temperature was 500 °C, and the holding time was 5 hours, so as to prepare the sintered magnet.

**Table 1. Alloy Composition of Examples 1-7 and Comparative Examples 1-8**

| | | **Content** | | | | | | |
|---|---|---|---|---|---|---|---|---|
| | | **Nd** | **Pr** | **Dy** | **Ho** | **Tb** | **Fe** | **Al** |
| **Example 1** | **Main alloy** | **23.84** | **5.96** | **\** | **\** | **\** | **68.35** | **\** |
| | **Auxiliary alloy** | **24** | **2** | **\** | **\** | **\** | **56.7** | **\** |
| | **Total content** | **23.84** | **5.87** | **\** | **\** | **\** | **68.09** | **\** |
| **Example 2** | **Main alloy** | **18.7** | **12.8** | **\** | **2.1** | **\** | **65.38** | **\** |
| | **Auxiliary alloy** | **12.9** | **\** | **\** | **\** | **\** | **51.3** | **5** |
| | **Total content** | **18.56** | **12.49** | **\** | **2** | **\** | **65.08** | **0.12** |
| **Example 3** | **Main alloy** | **26.8** | **7** | **1** | **\** | **\** | **63.36** | **\** |
| | **Auxiliary alloy** | **20** | **\** | **\** | **\** | **\** | **77** | **1** |
| | **Total content** | **25.87** | **6.13** | **0.88** | **\** | **\** | **64.27** | **0.12** |
| **Example 4** | **Main alloy** | **29** | **5** | **2** | **\** | **\** | **61** | **\** |
| | **Auxiliary alloy** | **25** | **\** | **\** | **\** | **\** | **69.5** | **1.5** |
| | **Total content** | **28.72** | **4.65** | **1.86** | **\** | **\** | **61.60** | **0.11** |
| **Example 5** | **Main alloy** | **25** | **5.6** | **\** | **\** | **2** | **64.92** | **\** |
| | **Auxiliary alloy** | **23.8** | **2** | **\** | **\** | **\** | **62** | **4.5** |
| | **Total content** | **24.96** | **5.47** | **\** | **\** | **1.94** | **64.81** | **0.17** |
| **Example 6** | **Main alloy** | **29.5** | **\** | **\** | **\** | **1** | **65.96** | **\** |
| | **Auxiliary alloy** | **28** | **\** | **\** | **\** | **\** | **64.4** | **5.2** |
| | **Total content** | **29.46** | **\** | **\** | **\** | **0.97** | **65.76** | **0.16** |
| **Example 7** | **Main alloy** | **29.5** | **\** | **\** | **\** | **1** | **65.96** | **\** |
| | **Auxiliary alloy** | **28** | **\** | **\** | **\** | **\** | **64.4** | **5.2** |
| | **Total content** | **29.46** | **\** | **\** | **\** | **0.97** | **65.76** | **0.16** |
| **Comparative Example 1** | **Main alloy** | **23.84** | **5.96** | **\** | **\** | **\** | **68.35** | **\** |
| | **Auxiliary alloy** | **24** | **2** | **\** | **\** | **\** | **65** | **\** |
| | **Total** | **23.84** | **5.87** | **\** | **\** | **\** | **68.27** | **\** |
| | **content** | | | | | | | |
| **Comparative Example 2** | **Main alloy** | **18.7** | **12.8** | **\** | **2.1** | **\** | **65.38** | **\** |
| | **Auxiliary alloy** | **12.9** | **\** | **\** | **\** | **\** | **60.3** | **\** |
| | **Total content** | **18.56** | **12.49** | **\** | **2.00** | **\** | **65.30** | **\** |
| **Comparative Example 3** | **Main alloy** | **18.7** | **12.8** | **\** | **2.1** | **\** | **65.21** | **\** |
| | **Auxiliary alloy** | **12.9** | **\** | **\** | **\** | **\** | **58.2** | **5** |
| | **Total content** | **18.56** | **12.49** | **\** | **2.00** | **\** | **65.08** | **0.12** |
| **Comparative Example 4** | **Main alloy** | **26.8** | **7** | **1** | **\** | **\** | **63.36** | **\** |
| | **Auxiliary alloy** | **20** | **\** | **\** | **\** | **\** | **75.6** | **1** |
| | **Total content** | **25.96** | **6.13** | **0.88** | **\** | **\** | **64.00** | **0.12** |
| **Comparative Example 5** | **Main alloy** | **29** | **5** | **2** | **\** | **\** | **61** | **\** |
| | **Auxiliary alloy** | **25** | **\** | **\** | **\** | **\** | **67.7** | **1.5** |
| | **Total content** | **28.72** | **4.65** | **1.86** | **\** | **\** | **61.49** | **0.11** |
| **Comparative Example 6** | **Main alloy** | **25** | **5.6** | **\** | **\** | **2** | **64.92** | **\** |
| | **Auxiliary alloy** | **23.8** | **2** | **\** | **\** | **\** | **72.3** | **\** |
| | **Total content** | **24.96** | **5.47** | **\** | **\** | **2.12** | **65.27** | **\** |
| **Comparative Example 7** | **Total content** | **23.84** | **5.87** | **\** | **\** | **\** | **68.09** | **\** |
| **Comparative Example 8** | **Total content** | **29.46** | **0** | **\** | **\** | **0.97** | **65.91** | **0.16** |

**Table 1 (Continued). Alloy Composition of Examples 1-7 and Comparative Examples 1-8**

| | | **Content** | | | | | | |
|---|---|---|---|---|---|---|---|---|
| | | **Cu** | **Mn** | **Co** | **Ga** | **Ti** | **Zr** | **B** |
| **Example 1** | **Main alloy** | **\** | **\** | **0.5** | **0.25** | **0.12** | **\** | **0.98** |
| | **Auxiliary** | **8** | **8.3** | **\** | **\** | **\** | **\** | **1** |
| | **alloy** | | | | | | | |
| | **Total content** | **0.18** | **0.18** | **0.49** | **0.24** | **0.12** | **\** | **0.98** |
| **Example 2** | **Main alloy** | **\** | **\** | **\** | **0.12** | **\** | **\** | **0.9** |
| | **Auxiliary alloy** | **4** | **6.9** | **\** | **\** | **\** | **19.9** | **\** |
| | **Total content** | **0.1** | **0.17** | **0** | **0.12** | **0** | **0.48** | **0.88** |
| **Example 3** | **Main alloy** | **\** | **\** | **1.5** | **\** | **0.36** | **\** | **0.98** |
| | **Auxiliary alloy** | **1** | **1** | **\** | **\** | **\** | **\** | **\** |
| | **Total content** | **0.12** | **0.12** | **1.31** | **\** | **0.32** | **\** | **0.86** |
| **Example 4** | **Main alloy** | **\** | **\** | **2** | **\** | **\** | **\** | **1** |
| | **Auxiliary alloy** | **2** | **2** | **\** | **\** | **\** | **\** | |
| | **Total content** | **0.14** | **0.14** | **1.86** | **\** | **\** | **\** | **0.92** |
| **Example 5** | **Main alloy** | **\** | **\** | **\** | **\** | **0.5** | **0.8** | **0.98** |
| | **Auxiliary alloy** | **3.8** | **1.9** | **2** | **\** | **\** | **\** | **\** |
| | **Total content** | **0.14** | **0.07** | **0.07** | **0** | **0.48** | **0.77** | **0.94** |
| **Example 6** | **Main alloy** | **\** | **\** | **2** | **0.16** | **0.2** | **0.2** | **0.98** |
| | **Auxiliary alloy** | **3.6** | **4** | **\** | **\** | **\** | **\** | **\** |
| | **Total content** | **0.11** | **0.12** | **1.94** | **0.16** | **0.19** | **0.19** | **0.95** |
| **Example 7** | **Main alloy** | **\** | **\** | **2** | **0.16** | **0.2** | **0.2** | **0.98** |
| | **Auxiliary alloy** | **3.6** | **4** | **\** | **\** | **\** | **\** | **\** |
| | **Total content** | **0.11** | **0.12** | **1.94** | **0.16** | **0.19** | **0.19** | **0.95** |
| **Comparative Example 1** | **Main alloy** | **\** | **\** | **0.5** | **0.25** | **0.12** | **\** | **0.98** |
| | **Auxiliary alloy** | **8** | **\** | **\** | **\** | **\** | **\** | **1** |
| | **Total content** | **0.18** | **\** | **0.49** | **0.24** | **0.12** | **\** | **0.98** |
| **Comparative** | **Main alloy** | **\** | **\** | **\** | **0.12** | **\** | **\** | **0.9** |
| **Example 2** | | | | | | | | |
| | **Auxiliary alloy** | **\** | **6.9** | **\** | **\** | **\** | **19.9** | **\** |
| | **Total content** | **\** | **0.17** | **\** | **0.12** | **\** | **0.48** | **0.88** |
| **Comparative Example 3** | **Main alloy** | **\** | **0.17** | **\** | **0.12** | **\** | **\** | **0.9** |
| | **Auxiliary alloy** | **4** | **\** | **\** | **\** | **\** | **19.9** | **\** |
| | **Total content** | **0.10** | **0.17** | **\** | **0.12** | **\** | **0.48** | **0.88** |
| **Comparative Example 4** | **Main alloy** | **\** | **\** | **1.5** | **\** | **0.36** | **\** | **0.98** |
| | **Auxiliary alloy** | **1** | **2.4** | **\** | **\** | **\** | **\** | **\** |
| | **Total content** | **0.12** | **0.30** | **1.31** | **\** | **0.32** | **\** | **0.86** |
| **Comparative Example 5** | **Main alloy** | **\** | **\** | **2** | **\** | **\** | **\** | **1** |
| | **Auxiliary alloy** | **2** | **3.8** | **\** | **\** | **\** | **\** | **\** |
| | **Total content** | **0.14** | **0.25** | **1.86** | **\** | **\** | **\** | **0.92** |
| **Comparative Example 6** | **Main alloy** | **\** | **\** | **\** | **\** | **0.5** | **0.8** | **0.98** |
| | **Auxiliary alloy** | **\** | **1.9** | **2** | **\** | **\** | **\** | **\** |
| | **Total content** | **\** | **0.07** | **0.07** | **\** | **0.48** | **0.77** | **0.94** |
| **Comparative Example 7** | **Total content** | **0.18** | **0.18** | **0.49** | **0.24** | **0.12** | **\** | **0.98** |
| **Comparative Example 8** | **Total content** | **0.11** | **0.12** | **1.94** | **0.16** | **0.19** | **0.19** | **0.95** |

| | | | | | | | | |
|---|---|---|---|---|---|---|---|---|
| The "total content" in Table 1 refers to the content of each element in the prepared sintered magnet. | | | | | | | | |

**Table 2. Process Parameters of Examples 1-7 and Comparative Examples 1-8**

| | **Preparation method** | **Ratio of main alloy to auxiliary alloy** | **Particle size of mixed powder/µm** | **Primary sintering temperature/°C** | **Holding time/h** | **Secondary sintering temperature/°C** | **Holding time/h** |
|---|---|---|---|---|---|---|---|
| **Example 1** | **Dual alloy scale** | **97.8:2.2** | **3.7** | **1045** | **5.7** | **1055** | **6** |
| **Example 2** | **Dual alloy scale** | **97.6:2.4** | **3.7** | **1060** | **5.4** | **1080** | **5.5** |
| **Example 3** | **Dual alloy scale** | **87.6:12.4** | **3.3** | **1075** | **4.8** | **1085** | **5** |
| **Example 4** | **Dual alloy scale** | **93:7** | **3.2** | **1080** | **6.0** | **1085** | **5** |
| **Example 5** | **Dual alloy scale** | **97:3** | **3.4** | **1045** | **5.6** | **1050** | **4.5** |
| **Example 6** | **Dual alloy scale** | **97:3** | **3.4** | **1040** | **5.6** | **1050** | **5** |
| **Example 7** | **Dual alloy powder** | **97:3** | **3.4** | **1040** | **5.6** | **1050** | **5** |
| **Comparative Example 1** | **Dual alloy scale** | **97.8:2.2** | **3.7** | **1045** | **5.7** | **1055** | **6** |
| **Comparative Example 2** | **Dual alloy scale** | **97.6:2.4** | **3.7** | **1060** | **5.4** | **1080** | **5.5** |
| **Comparative Example 3** | **Dual alloy scale** | **97.6:2.4** | **3.7** | **1060** | **5.4** | **1080** | **5.5** |
| **Comparative Example 4** | **Dual alloy scale** | **87.6:12.4** | **3.3** | **1060** | **5.4** | **1080** | **5.5** |
| **Comparative Example 5** | **Dual alloy scale** | **93:7** | **3.2** | **1080** | **6.0** | **1085** | **5** |
| **Comparative Example 6** | **Dual alloy scale** | **97:3** | **3.4** | **1045** | **5.6** | **1050** | **4.5** |
| **Comparative Example 7** | **Alloy smelting** | **100:0** | **3.7** | **1045** | **5.7** | **1055** | **6** |
| **Comparative Example 8** | **Alloy smelting** | **100:0** | **3.4** | **1040** | **5.6** | **1050** | **5** |

**Table 3. Magnetic Property Results for Examples 1-7 and Comparative Examples 1-8**

| | **Br/T** | **Hcj/(KA/m)** | **(BH)max/kJ/m^3** | **Hk/Hcj** | **Density (g/cm³)** |
|---|---|---|---|---|---|
| **Example 1** | **1.441** | **1470** | **405.9** | **0.977** | **7.53** |
| **Example 2** | **1.378** | **1389** | **384** | **0.987** | **7.55** |
| **Example 3** | **1.300** | **1708** | **334** | **0.977** | **7.53** |
| **Example 4** | **1.389** | **1582** | **325** | **0.985** | **7.51** |
| **Example 5** | **1.375** | **2043** | **415** | **0.974** | **7.53** |
| **Example 6** | **1.421** | **1386** | **398.2** | **0.975** | **7.51** |
| **Example 7** | **1.421** | **1376** | **397.6** | **0.974** | **7.53** |
| **Comparative Example 1** | **1.448** | **1421** | **406.3** | **0.980** | **7.52** |
| **Comparative Example 2** | **1.382** | **1325** | **382** | **0.986** | **7.56** |
| **Comparative Example 3** | **1.381** | **1349** | **380** | **0.983** | **7.53** |
| **Comparative Example 4** | **1.312** | **1660** | **334** | **0.969** | **7.52** |
| **Comparative Example 5** | **1.401** | **1530** | **321** | **0.988** | **7.52** |
| **Comparative Example 6** | **1.387** | **1860** | **416** | **0.963** | **7.50** |
| **Comparative Example 7** | **1.446** | **1442** | **404.1** | **0.976** | **7.52** |
| **Comparative Example 8** | **1.423** | **1365** | **398.2** | **0.977** | **7.53** |

By comparing the magnetic property data of Example 1 with Comparative Example 1, it can be seen that, due to containing the Mn element, the sintered magnet prepared according to the present invention had a higher Hcj and a less decrease in Br than Comparative Example 1 without Mn element.

By comparing Example 1 with Comparative Example 7, Hcj of the sintered magnet prepared by the dual alloy preparation process of the present invention was significantly improved. Similarly, by comparing Example 6 and Comparative Example 8, Hcj of the sintered magnet prepared by the dual alloy preparation process was significantly improved. It can be seen that according to the present invention, the sintered magnet had higher coercivity by adding Mn to the sintered magnet as an auxiliary alloy.

By comparing Example 2 with Comparative Examples 2 and 3, Al and Cu were added to the auxiliary alloy and Mn was added to the auxiliary alloy in Example 2; only Mn was added to the auxiliary alloy and Al and Cu were not added to the alloy in Comparative Example 2; Al and Cu were added to the auxiliary alloy and Mn was added to the main alloy in Comparative Example 3. As can be seen from the magnetic property results in Table 3, although Mn was added in Comparative Examples 2 and 3, Al and Cu were not added to the auxiliary alloy, such that Hcj of the sintered magnet was low; Mn was added as a main alloy, such that Hcj of the sintered magnet was also low. Similarly, by comparing Example 5 with Comparative Example 6, Al, Cu, and Mn were added to the auxiliary alloy in Example 5, and only Mn was added to the auxiliary alloy in Comparative Example 6. As can be seen from the magnetic property results in Table 3, Hcj of Comparative Example 6 was relatively low.

Therefore, the sintered magnet having excellent coercivity can be prepared only by adding Al and/or Cu and adding Mn to the auxiliary alloy at the same time. In conclusion, the Mn element is added to the auxiliary alloy and acts on the grain boundary to form a surrounding layer in the grain boundary, such that less Cu and less Al enter the main phase, thereby effectively improving the coercivity.

By comparing Example 6 with Example 7, the main alloy scale and the auxiliary alloy scale of Example 6 were mixed before hydrogen decrepitation, and then subjected to jet milling for crushing; the main alloy scale and the auxiliary alloy scale of Example 7 were respectively subjected to hydrogen decrepitation and jet milling to give a main alloy powder and an auxiliary alloy powder respectively, and then the main alloy powder and the auxiliary alloy powder were mixed. As can be seen from Table 3, the two mixing methods have little influence on magnetic property.

By comparing Example 3 with Comparative Example 4, 0.12 wt% of Mn was contained in Example 3, and 0.3 wt% of Mn was contained in Comparative Example 4. By comparing Example 4 and Comparative Example 5, 0.14 wt% of Mn was contained in Example 4, and 0.25 wt% of Mn was contained in Comparative Example 5. As can be seen from the magnetic property results in Table 3, the sintered magnets prepared according to the present invention have more excellent magnetic property, indicating that the magnetic property of the sintered magnet is lowered when the amount of Mn added exceeds a certain limit.

### Examples 8-16 and Comparative Examples 9-13

(1) On the basis of Example 3, only the total amount of Mn added was changed in Examples 8-16 and Comparative Examples 9-13. The total contents of Mn in Examples 8-16 were 0.07 wt%, 0.08 wt%, 0.1 wt%, 0.14 wt%, 0.16 wt%, 0.18 wt%, 0.2 wt%, 0.22 wt%, and 0.23 wt%, and the total contents of Mn in Comparative Examples 9-12 were 0.00 wt%, 0.24 wt%, 0.26 wt%, 0.28 wt%, and 0.3 wt%. Starting materials were weighed according to the proportion of each main alloy scale (the unit was wt%), blended, smelted under an argon atmosphere and then casted onto a quenching roller to give Mn-free neodymium-iron-boron main alloy scales. Similarly, auxiliary alloy starting materials were melted and casted under an argon atmosphere to give Mn-containing auxiliary alloy scales. The main alloy scales and the auxiliary alloy scales were mixed according to a proportion, and then subjected to hydrogen decrepitation and jet milling to give mixed alloy powders having uniform particle sizes, wherein the average particle size of the mixed alloy powders was 3.7 µm.
(2) The mixed alloy powders in the step (1) were oriented and shaped in a magnetizing field, and then subjected to cold isostatic pressing to form pressed compacts. The pressed compacts were subjected to primary sintering at a temperature of 1060 °C for 5.4 hours; then subjected to secondary sintering at a temperature of 1080 °C for 5.5 hours.
(3) The blanks described above were subjected to two-stage tempering in a vacuum tempering furnace, wherein the primary tempering temperature was 800 °C, and the holding time was 5 hours; the secondary tempering temperature was 500 °C, and the holding time was 5 hours, so as to prepare the sintered magnet.

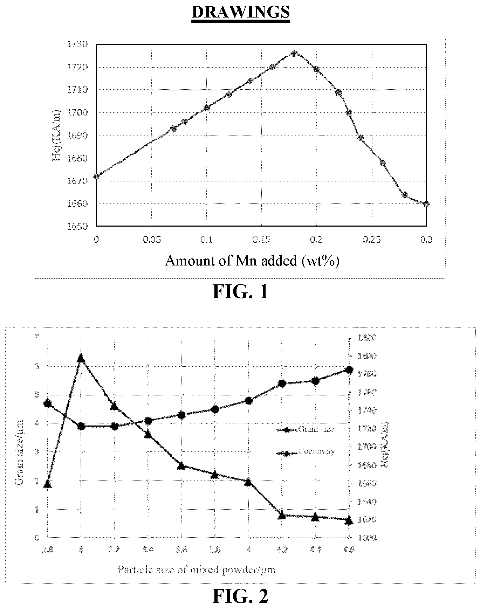

FIG. 1 shows the coercivity of Examples 3 and 8-16 and Comparative Examples 9-13 as a function of the amount of Mn added. It can be seen from FIG. 1 that the coercivity was the highest when the Mn content was 0.17-0.23% under the condition that only the amount of Mn added was changed.

In conclusion, the preferred range of Mn added to the auxiliary alloy was 0.17%-0.23%.

### Examples 17-21 and Comparative Examples 14-18

(1) Starting materials were weighed according to the proportion in Table 4 (the unit was wt%), blended, smelted under an argon atmosphere and then casted onto a quenching roller to give Mn-free neodymium-iron-boron main alloy scales. Similarly, auxiliary alloy starting materials were melted and casted under an argon atmosphere to give Mn-containing auxiliary alloy scales. The main alloy scales and the auxiliary alloy scales were mixed according to a proportion, subjected to hydrogen decrepitation and jet milling to give mixed alloy powders having uniform particle sizes shown in Table 5, where the same starting materials were adopted in Examples 17-21 and Comparative Examples 14-18.
(2) The mixed alloy powders in the step (1) were oriented and shaped in a magnetizing field, and then subjected to cold isostatic pressing to form pressed compacts. The pressed compacts were subjected to two-stage sintering according to the sintering temperatures and the sintering times shown in Table 5.
(3) The blanks described above were subjected to two-stage tempering in a vacuum tempering furnace, wherein the primary tempering temperature was 800 °C, and the holding time was 5 hours; the secondary tempering temperature was 500 °C, and the holding time was 5 hours, so as to prepare the sintered magnet.

**Table 4. Composition of Examples 17-21 and Comparative Examples 14-18**

| | **Content** | | | | | | | | | | | | | | |
|---|---|---|---|---|---|---|---|---|---|---|---|---|---|---|---|
| | **Nd** | **Pr** | **Dy** | **Ho** | **Tb** | **Fe** | **Al** | **Cu** | **Mn** | **Co** | **Ga** | **Ti** | **Zr** | **B** | **Mixing ratio** |
| **Main alloy** | **26.8** | **7** | **0.8** | **\** | **\** | **62.56** | **\** | **\** | **\** | **1.5** | **0.5** | **0.36** | **\** | **0.98** | **87.6** |
| **Auxiliary alloy** | **20** | **\** | **\** | **\** | **\** | **77** | **1** | **1** | **1** | **\** | **\** | **\** | **\** | **\** | **12.4** |
| **Total content** | **25.87** | **6.13** | **0.7** | **0** | **0** | **64.00** | **0.12** | **0.12** | **0.12** | **1.31** | **0.43** | **0.32** | **0** | **0.86** | **\** |

| | | | | | | | | | | | | | | | |
|---|---|---|---|---|---|---|---|---|---|---|---|---|---|---|---|
| The "total content" in Table 4 refers to the content of each element in the prepared sintered magnet. | | | | | | | | | | | | | | | |

**Table 5. Preparation Process and Performance of Examples 17-21 and Comparative Examples 14-18**

| | **Average particle size of mixed alloy powder/11m** | **Primary sintering temperature/°C** | **Secondary sintering temperature/°C** | **Grain size/µm** | **Density (g/cm³)** | **Hcj/(KA/m)** |
|---|---|---|---|---|---|---|
| **Example 17** | **3.0** | **1035** | **1055** | **3.9** | **7.54** | **1765** |
| **Example 18** | **3.2** | **1035** | **1055** | **3.9** | **7.54** | **1745** |
| **Example 19** | **3.4** | **1035** | **1055** | **4.3** | **7.55** | **1714** |
| **Example 20** | **3.6** | **1035** | **1055** | **4.5** | **7.53** | **1680** |
| **Example 21** | **3.8** | **1035** | **1055** | **4.8** | **7.52** | **1670** |
| **Comparative Example 14** | **4.0** | **1035** | **1055** | **5.4** | **7.52** | **1662** |
| **Comparative Example 15** | **4.2** | **1035** | **1055** | **5.5** | **7.51** | **1625** |
| **Comparative Example 16** | **4.4** | **1035** | **1055** | **5.9** | **7.51** | **1623** |
| **Comparative Example 17** | **4.6** | **1035** | **1055** | **5.9** | **7.51** | **1620** |
| **Comparative Example 18** | **2.8** | **1035** | **1055** | **4.7** | **7.45** | **1660** |

As can be seen from Table 5, the coercivity can be effectively improved by refining the crystal grains of the sintered magnet.

FIG. 2 is a graph showing the grain size and the coercivity as a function of the average particle size of the mixed alloy powder in Examples 17-21 and Comparative Examples 14-18. The growth of the crystal grains of the magnet can be adjusted by controlling the average particle size of the mixed powder within a specific temperature range. The preferred grain size was 3.9-4.8 µm. As can be seen from Table 5 and FIG. 2, the coercivity was the highest when the average particle size of the mixed alloy powder was 3.0-3.8 µm. When the particle size of the mixed alloy powder was smaller than 3.0 µm, oversintering was likely to occur during sintering, and the coercivity was drastically reduced. When the particle size of the mixed alloy powder was greater than 3.8 µm, the grain size uniformity of the product could not be effectively controlled, and the grain size of the product was greater than 4.8 µm.

The above examples illustrate the embodiments of the present disclosure. However, the present disclosure is not limited to the embodiments described above. Any modification, equivalent, improvement, and the like made without departing from the spirit and principle of the present disclosure shall fall within the protection scope of the present disclosure.

## Claims

1. A sintered Nd-Fe-B based magnet, comprising the following components by a mass ratio of 100%:
26-37 wt% of R, wherein R is at least one rare earth element comprising Nd;
0.07-0.23 wt% of Mn;
0.8-1 wt% of the B;
0.5-4 wt% of M, wherein M comprises Cu and/or Al, and further comprises at least one of Co, Ti, Ni, Zr, and Ga; and
the balance of Fe.

2. The sintered magnet according to claim 1, wherein the sintered Nd-Fe-B based magnet has a grain size of 3-6 µm.

3. A method for preparing the sintered magnet according to claim 1 or 2, comprising the following steps:
(S1) preparing an Mn-free neodymium-iron-boron main alloy scale and an Mn-containing auxiliary alloy scale respectively,
wherein the Mn-free neodymium-iron-boron main alloy scale comprises 29-36 wt% of R, 0.9-1 wt% of B, 0.1-3.5 wt% of M and the balance of Fe, and
the Mn-containing auxiliary alloy scale comprises 12-37 wt% of R, 1-10 wt% of Mn; 0-1 wt% of B, 0.5-30 wt% of M and the balance of Fe; and
(S2) performing a hydrogen decrepitation and a jet milling on the Mn-free neodymium-iron-boron main alloy scale and the Mn-containing auxiliary alloy scale obtained in the step (S1) to obtain a mixed alloy powder, and performing pressing, sintering, and tempering treatments on the mixed alloy powder to prepare the sintered Nd-Fe-B based magnet.

4. The method according to claim 3, wherein in the step (S1), M in the main alloy scale does not comprise Cu and/or Al, and M in the auxiliary alloy scale mandatorily comprises Cu and/or Al, wherein the content of Cu in the auxiliary alloy scale is 0-9 wt%, the content of Al in the auxiliary alloy scale is 0-8 wt%, and the contents of Cu and Al are not 0 simultaneously.

5. The method according to claim 3, wherein in the step (S1), R in the Mn-containing auxiliary alloy scale comprises at least 12-30 wt% of Nd.

6. The method according to claim 3, wherein in the step (S2), the Mn-free neodymium-iron-boron main alloy scale accounts for 87-98 wt% of the total amount of the Mn-free neodymium-iron-boron main alloy scale and the Mn-containing auxiliary alloy scale; and/or
in the step (S2), the mixed alloy powder comprises an Mn-free neodymium-iron-boron main alloy powder and an Mn-containing auxiliary alloy powder; and/or
in the step (S2), the sintering temperature is 800-1200 °C, and the holding time is 3-20 hours; and/or
a two-stage sintering including a primary sintering and a secondary sintering is adopted, wherein the primary sintering temperature is 900-1200 °C, and the holding time is 3-8 hours; and the secondary sintering temperature is 800-1100 °C, and the holding time is 3-7 hours; and/or
when the content of Mn in the sintered magnet is 0.15-0.23 wt% and the particle size of the alloy powder is 3.0-3.8 µm, the primary sintering temperature is 900-1050 °C, and the holding time is 6-8 hours.

7. The method according to claim 3, wherein in the step (S2), the tempering is a two-stage tempering including a primary tempering and a secondary tempering, wherein the primary tempering temperature is 700-950 °C, and the holding time is 4-8 hours; the secondary tempering temperature is 450-600 °C, and the holding time is 4-8 hours.

8. The method according to claim 3, wherein the step (S2) is a step (S2a) of performing the hydrogen decrepitation and jet milling on the Mn-free neodymium-iron-boron main alloy scale and the Mn-containing auxiliary alloy scale in the step (S1) respectively to obtain an Mn-free neodymium-iron-boron main alloy powder and an Mn-containing auxiliary alloy powder respectively, mixing the Mn-free neodymium-iron-boron main alloy powder and the Mn-containing auxiliary alloy powder to obtain a mixed alloy powder, and performing pressing, sintering, and tempering treatments on the mixed alloy powder to prepare the sintered Nd-Fe-B based magnet; and/or
in the step (S2a), the Mn-free neodymium-iron-boron main alloy powder has an average particle size of 3.0-3.8 µm; and/or
the Mn-containing auxiliary alloy powder has an average particle size of 3-4 µm.

9. The method according to claim 3, wherein the step (S2) is a step (S2b) of mixing the Mn-free neodymium-iron-boron main alloy scale and the Mn-containing auxiliary alloy scale in the step (S1), performing the hydrogen decrepitation and jet milling to obtain a mixed alloy powder, and performing pressing, sintering, and tempering treatments on the mixed alloy powder to prepare the sintered Nd-Fe-B based magnet; and/or
in the step (S2b), the mixed alloy powder has an average particle size of 3.0-3.8 µm.

10. Use of the sintered magnet according to claim 1 or 2 in the fields of new energy automobile industry and wind power generation.
